# FASCICULE DE BREVET EUROPEEN

(11) **EP 1 953 614 B1**
(45) Date de publication et mention de la délivrance du brevet: **23.01.2019**
(21) Numéro de dépôt: 08100793.2
(22) Date de dépôt: 23.01.2008
(51) Int. Cl.: G05B 9/03, G05B 23/02

(54) **Procédé de surveillance de moteurs d'avion**
Verfahren zur Überwachung von Flugzeugmotoren
Method of monitoring aircraft engines

(30) Priorité: 30.01.2007 FR 0700642
(43) Date de publication de la demande: 06.08.2008
(73) Titulaire: Safran Aircraft Engines, 75015 Paris (FR)
(72) Inventeur: Ausloos, Alexandre, 77220, FAVIERES (FR); Benitah, Jonathan, 94300, VINCENNES (FR); Maka, Olivier, PETERBOROUGH Ontario K9J5Y6 (CA); Masse, Jean-Rémi, 92210, SAINT CLOUD (FR)
(74) Mandataire: Gevers & Orès

(56) Documents cités:
- EP-A1- 1 413 736
- WO-A-03/042928

## Description

La présente invention concerne les systèmes de détection de défaut de fonctionnement des moteurs d'un avion et plus généralement de tous systèmes d'équipements au moins doublés dans l'avion et appartenant à ses parties essentielles, telles que groupe propulseur, gouvernes, etc.....

Elle concerne plus particulièrement les systèmes de contrôle des parties essentielles pour prévenir le personnel d'exploitation (pilotage ou maintenance) d'un fonctionnement défectueux.

Comme système de détection de fonctionnement anormal pour l'aide à la maintenance, on utilise généralement des équipements de test intégrés (« Built-In Test Equipment » : BITE) spécifiques du mauvais fonctionnement considéré.

Etant prévenu, le pilote de l'avion peut s'abstenir de solliciter l'équipement, faire appel à un équipement alternatif, et ainsi éviter un incident plus grave, ou bien, aidé par le diagnostic fourni par le BITE, le personnel de maintenance peut intervenir plus aisément et plus vite lors d'une opération de maintenance de l'avion pour réparer le défaut. Actuellement, la plupart des BITE comportent essentiellement des capteurs qui collectent des données ou paramètres de fonctionnement et ces paramètres sont numérisés et testés par logiciel en référence à des seuils ou à des modèles mathématiques prédéterminés.

Ici, chaque moteur est commandé par un calculateur désigné sous l'acronyme « FADEC » (Full Authority Digital Engine Control).

Les FADECs surveillent chacun les paramètres de fonctionnement du moteur qu'ils commandent. Ces paramètres moteur sont comparés à des seuils prédéterminés et identiques pour des configurations moteurs identiques, quel que soit l'avion sur lequel ils sont montés.

Or les avions ont chacun une utilisation spécifique qui individualise leur usure. Leurs moteurs subissent donc une usure spécifique et non modélisable de façon prédéterminée.

Les seuils prédéterminés ci-dessus ne sont donc pas en mesure de permettre une surveillance des paramètres moteurs spécifiques de leur usure. Cependant il est possible de surveiller un paramètre caractéristique de l'usure des moteurs et de suivre sa dégradation. En déterminant des seuils de criticité, on pourrait identifier différentes étapes de cette dégradation. Mais cette technique demanderait notamment de déterminer les paramètres les plus significatifs des modes de défaillance, les seuils d'usure à appliquer à ces paramètres et l'influence qu'exercent les conditions d'utilisation sur leur comportement. Tout cela nécessite une trop bonne connaissance des phénomènes physiques qui les concernent. WO037042928 décrit un procédé de surveillance de moteurs d'avion.

La demanderesse a cherché une solution pour simplifier le problème ci-dessus et c'est ainsi qu'elle propose son invention.

Ainsi, la présente invention concerne un procédé de surveillance de moteurs d'avion comportant au moins deux moteurs, chaque moteur étant commandé et contrôlé par un calculateur de contrôle moteur, les calculateurs étant reliés entre eux par un réseau de communication et chaque calculateur surveillant des paramètres de fonctionnement du moteur qu'il contrôle, le procédé étant caractérisé par le fait que les deux calculateurs émettent sur le réseau la valeur d'au moins un desdits paramètres pour être comparée avec celles du même paramètre émises par l'autre calculateur, et par le fait que si une valeur s'écarte de l'autre d'une différence supérieure à un seuil prédéterminé, un des moteurs est diagnostiqué en fonctionnement anormal.

L'environnement et l'utilisation étant identiques pour les deux moteurs, seules leurs performances influencent les différences enregistrées. Il n'est plus nécessaire de maîtriser les lois de la physique pour détecter leurs défaillances.

Pour un avion donné, un moteur a un comportement anormal dès lors que l'usure témoignée par un paramètre donné diffère de l'usure témoignée par le même paramètre de l'autre moteur de l'avion, d'où les comparaisons effectuées.

Par exemple, des phénomènes liés à la température, au régime, à l'attitude, à l'altitude, perturbent le niveau d'huile de lubrification dans son réservoir, ce qui empêche de connaître la quantité d'huile disponible à un moment donné. Par les comparaisons ci-dessus, on peut au moins savoir à tout moment si les deux moteurs disposent de la même quantité d'huile ou si l'un des deux réservoirs fuit.

L'invention consiste à appliquer une technique de mise en redondance couramment employée dans le domaine de la sécurité des personnes et de l'avion au domaine ci-dessus du test intégré BITE employé pour l'aide à la maintenance.

Cette technique de mise en redondance consiste à mettre en parallèle des équipements critiques identiques, un nombre n, de façon à déterminer par simple comparaison de leurs sorties, qui doivent à tout moment être sensiblement identiques, si l'un d'entre eux est défaillant, ou même lequel est défaillant et doit être éliminé. La détection nécessite deux équipements en parallèle, tandis que l'isolement d'un équipement défaillant en nécessite au moins trois.

Ici, il existe de nombreux paramètres, comme pour les fuites d'huile de l'exemple ci-dessus, pour lesquels l'isolement du moteur défaillant peut être obtenu même pour un bimoteur.

En résumé, on utilise donc la redondance des moteurs à la fois pour le diagnostic, le pronostic et pour la maintenance, conjointement avec des données de vraisemblance fortes.

De préférence, ce sont les calculateurs contrôlant les moteurs qui effectuent les comparaisons et élaborent les diagnostics qui en résultent, mais ces dernières peuvent aussi être effectuées par un calculateur central indépendant relié au réseau.

De préférence encore, chaque diagnostic d'un calculateur « moteur » est émis par lui vers l'autre pour y être comparé immédiatement et soit être mémorisé pour la maintenance, soit donner lieu à une action immédiate comme par exemple être affiché au pilote ou émis par une radio à une station au sol.

D'autres caractéristiques et avantages de la présente invention apparaîtront plus clairement à la lecture de la description ci-après du procédé de surveillance de moteurs d'avion selon l'invention, faite en référence au dessin annexé sur lequel :
la figure 1 est une première forme d'architecture de système de surveillance moteur mettant en oeuvre le procédé de l'invention ;
la figure 2 est une seconde forme d'architecture de système de surveillance moteur mettant en oeuvre le procédé de l'invention, et
la figure 3 est un organigramme simplifié du procédé de surveillance de moteurs d'avion selon l'invention.

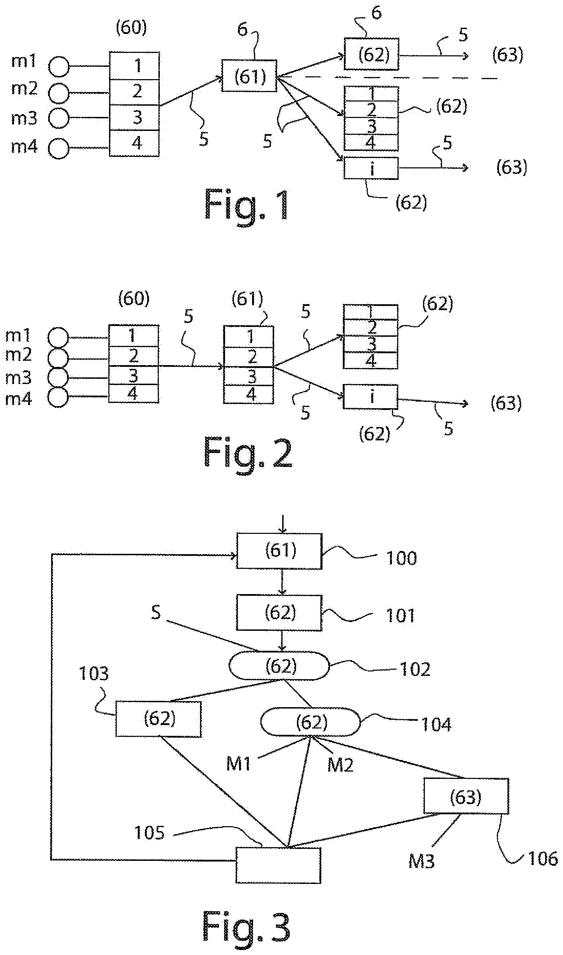

En référence aux figures 1 et 2, l'architecture va être détaillée sur l'exemple d'un quadrimoteur. Le système 10, de contrôle commande des moteurs m1, m2, m3, m4 d'un avion (non représenté), comporte des calculateurs FADECs 1, 2, 3, 4, chacun contrôlant et commandant un moteur respectivement repéré m(1), m(2), m(3), m(4), ou m1, m2, m3, m4 sur les figures.

Les FADECs, ici au nombre de quatre, sont reliés entre eux via l'avion par un réseau 5 de communication numérique AFDX (Avionics Full DupleX) par exemple, défini par la norme ARINC (Aeronautical Radio INCorporated), soit en liaison spécifique prévue pour les communications exposées ci-après soit par une liaison préexistante de l'avion dédiée d'autres communications, et émettent les données et paramètres du moteur qu'ils ont la charge de contrôler et de commander. Les FADEC étant des calculateurs à deux voies, ces dernières permettent de consolider les informations reçues en provenance du ou des autres FADEC.

Dans une première forme de réalisation (figure 1), il est prévu un calculateur central 6 « avion » également relié à ce réseau 5 pour regrouper par une de ses fonctions 61 et traiter par une de ses fonctions 62 les données et paramètres qu'il reçoit de tous les FADECs 1, 2, 3, 4 comme il va être expliqué plus loin.

Dans une seconde forme préférée de réalisation (figure 2), c'est un des FADECs 1, 2, 3, ou 4, le FADEC i, qui joue lui-même le rôle de la fonction 62 du calculateur 6, lequel n'est pas utile pour mettre en oeuvre l'invention.

Cependant dans ce dernier cas tous les FADECs 1, 2, 3, 4 sont identiques et peuvent traiter simultanément, à l'instar de la fonction 61 et comme il va être expliqué plus loin, les données et paramètres du moteur dont ils ont la charge augmentées des données et paramètres (émis par les autres FADECs) reçues sur le réseau 5.

Dans le premier cas, on notera que le calculateur central 6 peut ne jouer que le rôle d'intermédiaire 61 sur le réseau 5 pour seulement regrouper les données et paramètres émis par les FADECs et pour éventuellement déterminer le FADEC i qui exécutera le traitement ci-dessous.

Tout FADEC 1, 2, 3, 4, ou le calculateur central 6, ou le FADEC i, selon l'architecture adoptée, dispose donc des mêmes données et paramètres issus de tous les moteurs m1, m2, m3, m4 de l'avion et exécute le traitement de surveillance 62 qui va maintenant être expliqué, en référence à la figure 3, en même temps que le procédé de surveillance.
A une étape 100, par une fonction 60 d'émission sur le réseau 5, les calculateurs FADECs 1, 2, 3, 4 émettent sur le réseau 5 la valeur V(1), V(2), V(3) et V(4) respectivement d'au moins un paramètre de fonctionnement des moteurs m1, m2, m3, m4 respectivement, accompagné de son repère moteur « m1 », « m2 », « m3 », « m4 » correspondant à son adresse d'émission, et de sa référence de paramètre p(1), p(2), p(3), p(4) respectivement.

Le FADEC j (j = 1 à 4), ou le calculateur 6, reçoit, soit par la fonction 61 de réception et de regroupement des paramètres émis sur le réseau 5, soit par la fonction 61 des autres FADECs, les triplets V(k), m(k), p(k) (k = 1 à 4, k différent de j) et dispose des quatre triplets correspondants à k = 1, 2, 3,4.

A une étape 101, grâce à la fonction 62 du calculateur 6 ou de tout FADEC 1 à 4, toute valeur V(k) est comparée aux trois autres valeurs V(k') pour k' = 1, 2, 3, 4, k' étant différent de k, mais seulement si p(k') = p(k) ce qui atteste qu'il s'agit du même paramètre, mais correspondant à deux moteurs m(k) et m(k') différents.

On peut par exemple calculer les valeurs absolues d1(k), d2(k), d3(k) des différences V(k) - V(k') entre les valeurs de ces paramètres.

A une étape 102, les différences dl, d2, d3 ci-dessus sont comparées à un seuil S prédéterminé, correspondant à une tolérance de mesure du paramètre.
Si à une étape 103, aucune différence ne dépasse le seuil S, on passe à l'étape 105 sans aucune action particulière.

Sinon on passe à une étape 104 dans laquelle on compte le nombre de différences dépassant le seuil S. Alors par exemple :
si seulement une différence d1 dépasse le seuil S, l'événement est mémorisé en une mémoire M1 et on passe à l'étape 105.
si deux différences dl, d2 dépassent le seuil S, on calcule la valeur absolue d de la différence V(2) - V(1). Si d est inférieure à 2.S on passe à l'étape 105, sinon l'événement est mémorisé en mémoire M2 et on passe à l'étape 105.
si les trois différences dl, d2, d3 sont plus grandes que S, le paramètre p(k) s'écarte de tous les autres paramètres p(k') d'une différence supérieure au seuil S, alors le moteur k a un fonctionnement ou une usure qui s'écarte anormalement de celui des autres moteurs k', toutes conditions de fonctionnement étant égales par ailleurs, on passe à une étape 106 où il est déclaré en fonctionnement anormal relativement à celui des autres moteurs, grâce à une fonction d'affichage 63 et l'événement est mémorisé en mémoire M3, et on passe à l'étape 105.

A l'étape 105, on date l'inscription des mémoires M1, M2, M3 afin de permettre de rétablir un historique des événements pour mieux servir d'aide à la maintenance, et, le procédé devant s'appliquer continuellement lors du fonctionnement, on déclenche à nouveau l'étape 101.

Lorsque ce sont les calculateurs FADECs 1, 2, 3, 4 contrôlant les moteurs qui effectuent les comparaisons et élaborent les diagnostics qui en résultent par le procédé ci-dessus, ils peuvent tous émettre leur diagnostic en parallèle et ces diagnostics eux-mêmes être soumis à un vote de consolidation pour déterminer un diagnostic global à afficher.

De cette façon, une panne survenant sur un ou deux FADECs est surmontée, ce qui rend le système 10 deux fois sécurisé ou deux fois « fail operative » selon la terminologie anglo-saxonne.

Les diagnostics des calculateurs FADECs peuvent être émis par chacun vers les autres pour y être comparés et soit être mémorisés dans un boîtier pour la maintenance, soit donner lieu à une action immédiate comme par exemple être affichés au pilote ou émis par une radio à une station « sol », mais ces diagnostics peuvent aussi être émis vers un calculateur central « avion » de mémorisation, d'affichage, d'émission sol ou de toute autre commande système qui pourrait être nécessaire.

Inversement en utilisant un calculateur central 6 indépendant relié au réseau 5 pour centraliser les traitements, il n'est pas possible de surmonter une panne intervenant sur ce calculateur.

On remarquera qu'on profite du fait que les moteurs sont mis en redondance triple ou quadruple par besoin de sécurité des personnes pour exploiter la redondance, induite, des paramètres moteur aux fins d'en faire bénéficier d'une importante amélioration dans la précision du diagnostic les tests intégrés d'aide à la maintenance des FADECs.

Comme on vient de le voir, l'invention s'applique aux aéronefs comportant plus de deux moteurs mais s'applique également aux paramètres des avions comportant deux moteurs, pour lesquels la seule existence d'un écart désigne le moteur défaillant.

C'est, on l'a vu, le cas des niveaux d'huile (ou autres liquides). C'est aussi le cas pour de nombreux autres exemples comme :
la durée de démarrage, qui croît avec l'usure du moteur et qui peut désigner un moteur dégradé,
le régime moteur, qui traduit l'usure de la pompe à carburant.

On pourrait aussi adjoindre un modèle mathématique évoluant en fonction de l'utilisation et de l'environnement de l'avion pour lever le doute entre deux moteurs dont les paramètres, qui n'ont pas les propriétés ci-dessus de désigner le moteur défaillant, divergent trop relativement au seuil choisi.

Conjointement à la comparaison des paramètres, le modèle mathématique peut permettre l'isolement d'une défaillance.

L'invention pourrait s'appliquer aussi à d'autres ensembles que le groupe propulseur, tels que les commandes de vol généralement quadruplées, les systèmes de fermeture habitacle, ...

## Revendications

1. Procédé de surveillance de moteurs d'avion comportant au moins deux moteurs (m1, m2, m3, m4), chaque moteur (m1, m2, m3, m4) étant commandé et contrôlé par un calculateur (1, 2, 3, 4) de contrôle moteur, les calculateurs (1, 2, 3, 4) étant reliés entre eux par un réseau (5) de communication et chaque calculateur (1, 2, 3, 4) surveillant des paramètres (p, V) de fonctionnement du moteur (m1, m2, m3, m4) qu'il contrôle, le procédé étant **caractérisé par le fait que** les deux calculateurs (1, 2, 3, 4) émettent (60 ; 100) sur le réseau (5) la valeur (V(k)) d'au moins un desdits paramètres (p(k)) pour être comparée (62 ; 102, 103, 104) avec celles (V(k')) du même paramètre (p(k) = p(k')) émises par l'autre calculateur (1, 2, 3, 4), et **par le fait que** si une valeur (V(k)) s'écarte de l'autre (V(k')) d'une différence (d1(k), d2(k), d3(k)) supérieure à un seuil (S) prédéterminé, un des moteurs (m(k)) est diagnostiqué en fonctionnement anormal.

2. Procédé selon la revendication 1, dans lequel ce sont les calculateurs (1, 2, 3, 4) contrôlant les moteurs (m1, m2, m3, m4) qui effectuent les comparaisons (62 ; 102, 103, 104) et affichent (63 ; 106) les diagnostics qui en résultent.

3. Procédé selon la revendication 1, dans lequel les diagnostics sont effectués par un calculateur (6) central indépendant relié au réseau (5).

4. Procédé selon la revendication 2, dans lequel chaque diagnostic d'un calculateur (1, 2, 3, 4) est émis (61 ; 100) par lui vers l'autre calculateur pour y être comparé.

5. Procédé selon l'une des revendications 1 à 4, dans lequel chaque diagnostic est mémorisé (M1, M2, M3, M4) pour la maintenance.

6. Procédé selon l'une des revendications 1 à 5, dans lequel les diagnostics sont affichés (106) au pilote ou émis par une radio à une station sol.

## Patentansprüche

1. Verfahren zur Überwachung von Flugzeugmotoren mit mindestens zwei Motoren (m1, m2, m3, m4), wobei jeder Motor (m1, m2, m3, m4) von einem Motorsteuerrechner (1, 2, 3, 4) gesteuert und kontrolliert wird, wobei die Rechner (1, 2, 3, 4) miteinander durch ein Kommunikationsnetzwerk (5) verbunden sind und jeder Rechner (1, 2, 3, 4) Betriebsparameter (p, V) des von ihm gesteuerten Motors (m1, m2, m3, m4) überwacht, wobei das Verfahren **dadurch gekennzeichnet ist, dass** die beiden Rechner (1, 2, 3, 4) den Wert (V(k)) mindestens eines der zu vergleichenden (62; 102, 103, 104) Parameter (p(k)) mit denen (V(k')) des gleichen Parameters (p(k) = p(k')), die von dem anderen Rechner (1, 2, 3, 4) übertragen werden, an das Netzwerk (5) übertragen (60; 100), und dadurch, dass, wenn ein Wert (V(k)) um eine Differenz (d1(k), d2(k), d3(k)) größer als eine vorgegebene Schwelle (S) vom anderen (V(k')) abweicht, bei einem der Motoren (m(k)) ein anormaler Betriebszustand diagnostiziert wird.

2. Verfahren nach Anspruch 1, wobei diejenigen Rechner (1, 2, 3, 4), welche die Motoren (m1, m2, m3, m4) steuern, die Vergleiche (62; 102, 103, 104) durchführen und die daraus resultierenden Diagnosen anzeigen (63; 106).

3. Verfahren nach Anspruch 1, wobei die Diagnosen von einem unabhängigen Zentralrechner (6) durchgeführt werden, der mit dem Netzwerk (5) verbunden ist.

4. Verfahren nach Anspruch 2, wobei jede Diagnose eines Rechners (1, 2, 3, 4) von ihm an den anderen Rechner übertragen wird (61; 100), um dort verglichen zu werden.

5. Verfahren nach einem der Ansprüche 1 bis 4, wobei jede Diagnose für die Wartung gespeichert wird (M1, M2, M3, M4).

6. Verfahren nach einem der Ansprüche 1 bis 5, wobei die Diagnosen dem Piloten angezeigt (106) oder per Funk an eine Bodenstation übertragen werden.

## Claims

1. A method for monitoring plane engines comprising at least two engines (m1, m2, m3, m4), each engine (m1, m2, m3, m4) being controlled and monitored by an engine monitoring calculator (1, 2, 3, 4), said calculators (1, 2, 3, 4) being connected between them by a communication network (5) and each calculator (1, 2, 3, 4) monitoring the operating parameters (p, V) of the engine (m1, m2, m3, m4) it controls, the method being **characterized in that** the two calculators (1, 2, 3, 4) emit (60 ; 100) on the network (5) the value (V(k)) of at least one of said parameters (p(k)) for being compared (62 ; 102, 103, 104) with those (V(k')) of the same parameter (p(k) = p(k')) emitted by the other calculator (1, 2, 3, 4), and **in that**, if a value (V(k)) deviates from the other (V(k')) by a difference (dl(k), d2(k), d3(k)) higher than a predetermined threshold (S), one of the engines (m(k)) is diagnosed as being in an abnormal operation.

2. A method according to claim 1, wherein the calculators (1, 2, 3, 4) monitoring the engines (m1, m2, m3, m4) are those that carry out the comparisons (62; 102, 103, 104) and display (63; 106) the resulting diagnoses.

3. A method according to claim 1, wherein diagnoses are carried out by a self-standing central calculator (6) connected with the network (5).

4. A method according to claim 2, wherein each diagnosis of a calculator (1, 2, 3, 4) is emitted (61; 100) by the latter towards another calculator for being compared therein.

5. A method according to any of claims 1 to 4, wherein each diagnosis is stored in a memory (M1, M2, M3, M4) for maintenance.

6. A method according to any of claims 1 to 5, wherein diagnoses are displayed (106) to the pilot or emitted by a radio at a ground station.
